# EUROPEAN PATENT SPECIFICATION

(11) **EP 4 566 951 B1**
(45) Date of publication and mention of the grant of the patent: **23.09.2026**
(21) Application number: 24217663.4
(22) Date of filing: 05.12.2024
(51) Int. Cl.: B64G 1/22

(54) **SYSTEMS AND METHODS FOR HOLDING AND RELEASING A LARGE ANTENNA REFLECTOR**
SYSTEME UND VERFAHREN ZUM HALTEN UND FREIGEBEN EINES GROSSEN ANTENNENREFLEKTORS
SYSTÈMES ET PROCÉDÉS DE MAINTIEN ET DE LIBÉRATION D'UN RÉFLECTEUR D'ANTENNE DE GRANDE TAILLE

(30) Priority: 07.12.2023 US 202363607317 P
(43) Date of publication of application: 11.06.2025
(73) Proprietor: MacDonald, Dettwiler and Associates Corporation, Ste-Anne-de-Bellevue, QC H9X 3R2 (CA)
(72) Inventor: Larouche, Steve, Sainte-Anne-de-Bellevue, Quebec, H9X 3R2 (CA)
(74) Representative: Grünecker Patent- und Rechtsanwälte PartG mbB

(56) References cited:
- CN-B- 106 742 081
- DE-C2- 3 215 432
- US-A- 4 489 329
- US-A- 5 673 459
- US-A- 5 966 104
- US-A1- 2018 319 517

## Description

### Technical Field

The following relates generally to latching and hold-down and release mechanisms, and more particularly to latching mechanisms for large antenna reflectors in space-based applications.

### Introduction

To affix large antenna reflectors to a satellite spacecraft during launch, hold and release mechanisms (HRMs) are required. These HRMs, which typically include separation nuts and control lines from the spacecraft to the reflector, increase cost and schedule because of their long lead time. Some HRMs require extra components such as motors to affect the release, which increase weight and costs due to the extra material.

Accordingly, there is a need for an improved latching mechanism for antenna reflectors that overcomes at least some of the disadvantages of existing systems and methods.
US 4 489 329 A relates to a sensor release latch for space vehicle. A holding and releasing system provides temporary connection between a movable and a stationary part which are to be separated during the specific use thereof. It comprises a supporting foot connected to the fixed part, a rocker link hinged to said foot, a movable support hinged to said link, a sheaving bracket hinged to another end of said link, said link occupying two positions, i.e. a locking one in which the movable support bears on one face of the movable part, while the free end of the sheaving bracket bears on the other face of said movable part, to block the latter in a precise position, and a release position in which the movable support and said bracket are in a retracted position thereby releasing the movable part. The system is used especially in the space vehicle domain.

### Summary

The present invention has been made in view of the disadvantages and shortcomings of the prior art and an object thereof is to provide a latching mechanism system and a method as defined by the subject matter of the appended independent claims. Embodiments of the present invention are the subject matter of the dependent claims.

A latching mechanism system for holding and releasing a deployable component is provided, the latching mechanism system including a plurality of latching mechanisms disposed on a spacecraft, each including a first component attached to the deployable component and a second component attached to a spacecraft, wherein in a stowed configuration each of the first components is held by a respective second component, and a rotating mechanism disposed on the bottom surface of the deployable component and having an axis of rotation at a center of the deployable component, the rotating mechanism configured to rotate in a first direction around the axis of rotation to move the first components into the stowed configuration, and to rotate in a second direction opposite to the first direction to release the first components from the stowed configuration.

The rotating mechanism may be pivoting mechanism and the system may further comprise a release mechanism for holding the pivoting mechanism in the stowed configuration, wherein in the stowed configuration the pivoting mechanism has stored potential energy, and wherein releasing the release mechanism releases the stored potential energy causing the pivoting mechanism to rotate in the second direction, and releases the first components from the stowed configuration.

The rotating mechanism may be a rotary actuator.

The first component may be a pin, and the second component may be a latch.

The first component may be a pin, and the second component may be a latch comprising a groove, wherein the pin is oriented radially with respect to the rotating mechanism.

The first component may be a cone, and the second component may be a cup, wherein a cone-in-cup contact interfaces with a conical axis oriented circumferentially with respect to the rotating mechanism.

The release mechanism may be a separation nut, a High Output Paraffin (HOP) mechanism, a cable cutter, or a bolt breaking device.

The deployable component may be connected to a boom by a rotary joint at an approximate geometric center of the deployable component.

The release mechanism may be connected to the boom.

The pivoting mechanism may include a plurality of radial flexible blades, wherein the radial flexible blades are distorted when the pivoting mechanism is rotated in the first direction and held by the release mechanism, and wherein upon release of the release mechanism, stored potential energy in the distorted flexible radial blades rotates the pivoting mechanism in the second direction to rotate the deployable component and release the first components from the second components, thereby releasing the deployable component.

Each latching mechanism of the plurality of latching mechanisms may include a spring mechanism which holds the first component and the second component in the hold position. Each spring mechanism may be a torsion spring which releases the first component when enough torque is applied due to the release of the release mechanism and rotation of the pivoting mechanism in the second direction.

The plurality of latching mechanisms may constrain the deployable component along axial and radial directions with respect to a pivoting axis.

The deployable component may be an antenna reflector.

Provided herein is a method of latching a deployable component hold and release latching mechanism system, the method including rotating a rotating mechanism in a first direction around a rotation axis of the rotating mechanism until each of a plurality of first components of a latching mechanism system are held by a respective second component of a plurality of second components of the latching mechanism system, wherein the plurality of first components are attached to a first surface of the deployable component, wherein the plurality of second components are attached to a spacecraft, and wherein the rotation axis of the rotating mechanism 130, 870) is at a center of the deployable component.

The rotating mechanism may be a pivoting mechanism attached to the first surface of the deployable component and to a boom and includes a plurality of radial flexible blades which are distorted upon rotation in the first direction, and the method may further include restraining the pivoting mechanism in a stowed configuration by a release mechanism, wherein in the stowed configuration each of the plurality of first components is held by a respective second component, and wherein in the stowed configuration the plurality of radial flexible blades stored torsional energy in a second direction opposite the first direction.

The method may further comprise restraining each of the plurality of first components within the respective second component by a spring mechanism.

The first component may be a pin, and the second component may be a latch.

The first component may be a pin, and the second component may be a latch comprising a groove, wherein the pin is oriented radially with respect to the rotating mechanism.

The first component may be a cone, and the second component may be a cup, wherein a cone-in-cup contact interfaces with a conical axis oriented circumferentially with respect to the rotating mechanism.

The spring mechanism may be a torsion spring.

The rotating mechanism may be a rotary actuator connected to the deployable component.

Provided herein is a method of releasing a latching mechanism for holding and releasing a large deployable component, the method including activating a release mechanism to release stored torsional energy from a plurality of radial flexible blades of a pivoting mechanism held in a stowed configuration by the release mechanism, wherein the pivoting mechanism is attached to a surface of a deployable component and to a boom and wherein the plurality of radial flexible blades were distorted by rotation of the pivoting mechanism in a first direction, wherein release of the stored torsional energy rotates the pivoting mechanism in a second direction opposite the first direction causing release of a plurality of first components from a plurality of respective second components, the first components attached to the non-reflective surface of the deployable component and the second components attached to a spacecraft, thereby moving the deployable component into a deployed configuration.

The release mechanism may be one of a separation nut, a High Output Paraffin (HOP) mechanism, a cable cutter, and a bolt breaking device.

The release mechanism may be activated by application of heat.

Provided herein is a system for stowing and subsequently releasing a deployable component, the system including a rotating mechanism for rotating in first and second opposing directions, wherein rotation in the first direction stores preload in the form of rotational potential energy, the rotating mechanism attached to the deployable component in such a way that rotation of the rotating mechanism is transferred to or causes rotation of the deployable component in the same direction, a release mechanism for locking the rotating mechanism in place when the pivoting mechanism has been rotated in the first direction to a locking position, thereby preventing the rotating mechanism from rotating in the second direction, a latching mechanism comprising a first hardware component on a bottom surface of the deployable component and a second hardware component on a spacecraft, the first and second hardware components configured to engage to latch and hold the deployable component to the spacecraft, wherein upon release of the release mechanism, the rotating mechanism rotates in the second direction via release of the preload, the rotation of the rotating mechanism causing rotation of the deployable component in the second direction, which causes the first hardware component of the latching mechanism to disengage from the second hardware component, thereby releasing the deployable component from the spacecraft.

Provided herein is a method of stowing a deployable component for subsequent release, the method including providing (i) a latching mechanism comprising a first hardware component on the deployable component and a second hardware component on a spacecraft housing the spacecraft, (ii) a pivoting mechanism, and (iii) a release mechanism; rotating the pivoting mechanism in a first direction to a locking position to store rotational potential energy in the pivoting mechanism, the locking position being a sufficient distance in the first direction to latch the latching mechanism by engaging the second hardware component with the first hardware component; latching the latching mechanism while the pivoting mechanism is in the locking position; and locking the pivoting mechanism in the locking position with a release mechanism to prevent rotation of the pivoting mechanism in a second direction, wherein upon release of the release mechanism the pivoting mechanism rotates in the second direction with sufficient force to disengage the first hardware component from the second hardware component, thereby releasing the deployable component from the spacecraft.

Provided herein is a method of deploying a deployable component from a stowed configuration, the method including providing a pivoting mechanism in a locked position in which the pivoting mechanism stores preload in the form of rotational potential energy, the locked position achieved by rotating the pivoting mechanism in a first direction, the pivoting mechanism attached to the deployable component such that rotation of the pivoting mechanism is transferred to or causes rotation of the deployable component in the same direction, releasing a release mechanism holding the pivoting mechanism in the locked position to allow the release of the preload in the pivoting mechanism, and unlatching a latching mechanism via the rotational motion of the pivoting mechanism in the second direction caused by release of the preload stored in the pivoting mechanism when in the locked position, the rotation of the pivoting mechanism causing rotation of the deployable component in the second direction with sufficient force to disengage a first hardware component of the latching mechanism attached to the deployable component from a second hardware component of the latching mechanism attached to a spacecraft housing the deployable component, thereby releasing the deployable component from the spacecraft.

Provided herein is a method of stowing a deployable component for subsequent release, the method including providing (i) a latching mechanism comprising a first hardware component on the deployable component and a second hardware component on a spacecraft housing the spacecraft, and (ii) a rotary actuator, and rotating the rotary actuator in a first direction to a locking position, the locking position being a sufficient distance in the first direction to latch the latching mechanism by engaging the second hardware component with the first hardware component.

The method may further include locking the first hardware component in the locking position with a release mechanism to prevent rotation of the deployable component in a second direction opposite the first direction, and upon release of the release mechanism, rotating the deployable component to disengage the first hardware component from the second hardware component, thereby releasing the deployable component from the locking position.

In the locking position, the deployable element may have stored potential energy to automatically release the deployable element from the locking position when the release mechanism is released.

The rotary actuator may rotate the deployable element in the second direction when the release mechanism is released.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1A is a schematic top view of a portion of an antenna system including a latching system for latching an antenna reflector, the latching system including a pivoting mechanism, and the antenna reflector depicted as transparent, according to an embodiment;
Figure 1B is a schematic side view of the antenna system taken along line A-A of Figure 1A, showing a latch and the reflector in isolation;
Figure 1C is a schematic side view of the antenna system taken along line B-B of Figure 1A (without the latches);
Figure 2 is a flow diagram of a method of latching the antenna reflector of Figures 1A-1C for subsequent release, according to an embodiment;
Figure 3 is a flow diagram of a method of releasing the latching mechanism of Figures 1A-1C, according to an embodiment;
Figure 4 is a schematic partially transparent view of a latching mechanism, according to an embodiment;
Figures 5A-5D are schematic diagrams of an unlatching operation of the latching mechanism of Figure 4, according to an embodiment;
Figures 6A-6D are schematic diagrams of a latching operation of the latching mechanism of Figure 4, according to an embodiment;
Figure 7 is a cross-sectional schematic diagram of the release mechanism and separation plane that releases stored energy of Figure 1A, according to an embodiment;
Figure 8A is a schematic top view of a portion of an antenna system including a latching system for latching an antenna reflector, the latching system including a rotary actuator, and the antenna reflector depicted as transparent, according to an embodiment;
Figure 8B is a schematic side view of the antenna system taken along line A-A of Figure 8A, showing a latch and the reflector in isolation; and
Figure 8C is a schematic side view of the antenna system taken along line B-B of Figure 8A (without the latches).

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and/or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The present disclosure relates generally to latching and hold-down and release mechanisms, and more particularly to latching mechanisms for deployable components (e.g., large antenna reflectors) in space-based applications. The present disclosure also relates to single use latching mechanisms for deployable components such as large antenna reflectors.

The systems, methods, and devices of the present disclosure may be used to hold and release a deployable component. The deployable component may be, for example, an antenna, an antenna reflector, a propulsion system, a scientific instrument, a camera or other optical system, etc. The deployable component may be a component or device intended for use in space. While the present disclosure refers throughout to the holding and releasing of an antenna reflector, it should be understood that this is one nonlimiting example of a deployable component on which the systems and methods of the present disclosure may be used, and that the hold and release of other deployable components are expressly contemplated herein.

The latching system of the present disclosure uses a rotating mechanism attached to a reflector and a boom. The rotating mechanism may be a pivoting mechanism, a rotary actuator, or another mechanism which can provide rotation of the reflector. The rotating mechanism is rotated in a first direction to insert a first component on the reflector into a second component on a spacecraft (or other base of the reflector). The first component may be latching pins on the reflector which are inserted into latch grooves of latches (the second component) on a spacecraft. The rotating mechanism may be held in place by a release mechanism. The rotating mechanism has an axis of rotation that is positioned at the center of the reflector (with the center of the reflector preferably being the center of gravity of the reflector). The rotating mechanism is oriented along the reflector normal plane.

The latching system includes at least three latching mechanisms spaced concentrically around the rotation axis of the rotating mechanism. Each latching mechanism includes a latch and a latching pin. Each latch includes a groove for receiving the latching pin.

When the latching pins are within the grooves of the latches, springs may hold the latching pins in place within the groove.

When the rotating mechanism is a pivoting mechanism, the rotation of the pivoting mechanism may be prevented by a release mechanism. The release mechanism may be a bolt breaking device (e.g., Frangibolt) or any other releasable or fracturable/breakable connection that can be released without the use of a motor.

A pivoting mechanism may include radial flexible blades. The radial flexible blades are distorted when the pivoting mechanism is rotated in the first direction and held by the release mechanism. The distortion of the radial flexible blades stores potential energy. Upon release or activation of the release mechanism, the stored potential energy causes the pivoting mechanism to rotate the reflector with enough torque and displacement along the latch grooves to release the springs holding the latching pins in the latch grooves, thus releasing the reflector. When released, the boom is the only remaining link between the reflector and the spacecraft.

The latching mechanism of the present disclosure may provide various advantages, including reduction in materials, time, and costs compared to conventional HRMs. Further, only a single release mechanism is required to release a payload, such as an antenna reflector, from a stowed configuration.

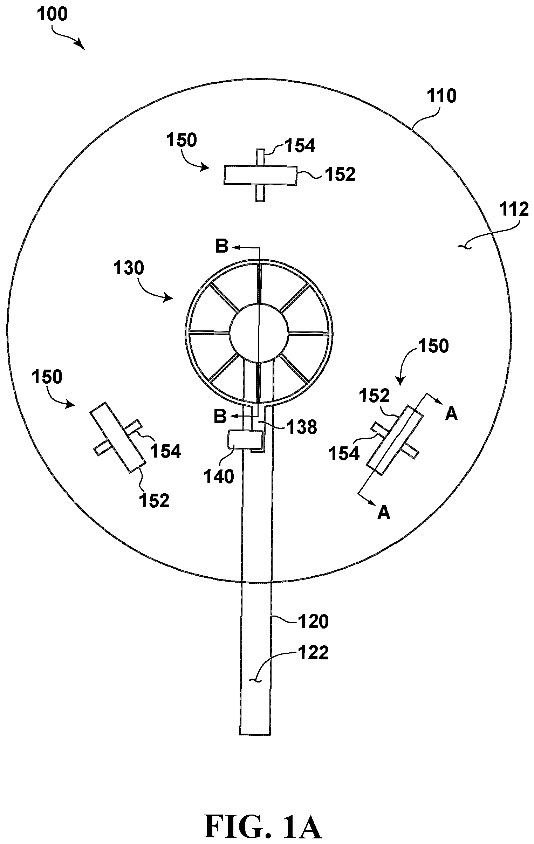

Referring now to Figures 1A-1C, shown therein is a portion of an antenna system 100 including a latching system for providing hold down and release functionalities with a pivoting mechanism, according to an embodiment.

The antenna system 100 includes a reflector 110 for reflecting a radiofrequency ("RF") signal and a boom 120 for manipulating or moving the reflector 110 in one or more directions. The boom 120 is connected to the reflector 110 at one end and to a spacecraft on which the antenna system is disposed at the other end.

The reflector 110 includes a first surface 112 (or top surface 112) and an opposing second surface 114 (or bottom surface 114). The top surface 112 is a reflecting surface and is used to reflect RF signals. The bottom surface 114 is used for mounting various components to the reflector 110, including components of the latching system.

The top view in Figure 1A is of the top or reflecting surface 112 of the reflector 110. For illustrative purposes, the reflector 110 is represented as transparent in Figure 1A so that elements underneath the reflector 110 are visible. Note that the elements in Figure 1A depicted within the circle of reflector 110 are all below or behind the reflector 110.

The boom 120 may be connected to the reflector 110 by a rotary joint (not shown) located at the approximate geometric center of the reflector 110 to enable movement of the reflector during the release operation. The rotary joint may include a motorized rotary actuator.

The antenna system 100 includes a latching system for providing hold down and release functionalities to the reflector 110. Generally, the latching system holds the reflector 110 in a stowed configuration or position under the latching system is released. Once released, the reflector 110 is free to be deployed by the boom 120.

The latching system includes a pivoting mechanism 130, a release mechanism 140, and three latching mechanisms 150. In other embodiments, the number of latching mechanisms 150 may be greater than three.

The pivoting mechanism 130 is connected to both the reflector 110 and the boom 120. The pivoting mechanism 130 has a rotation axis at the center of the reflector 110. The pivoting mechanism 130 is oriented along the normal plane of the reflector 110.

The pivoting mechanism 130 is a bracket including two concentric circular components 132 (inner circle) and 134 (outer circle) which are connected by a plurality of radial flexible blades 136. In the embodiment of Figures 1A-1C, the number of blades 136 is eight. In other embodiments, the number of blades 136 may vary depending on the blade length and cross-section dimensions, with the design of the blades 136 being driven by the torque and rotation required to free the pins 154 from the latches 152.

The pivoting mechanism 130 includes hold-and-release mechanism interface component 138. The hold-and-release mechanism interface component 138 interfaces with the release mechanism 140.

The release mechanism 140 is also attached to the boom 120. Together, the pivoting mechanism 130 and the release mechanism 140 provide release functionality to release the reflector 110 from the stowed configuration (described below).

In an embodiment, the pivoting mechanism 130 is a metal bracket. The metal may be, for example, aluminum, titanium, steel, or invar. The pivoting mechanism 130 may be subtractively or additively manufactured.

Latching mechanisms 150 are positioned concentrically, with reference to the center of gravity of the reflector 110. The latching mechanisms 150 are positioned roughly equidistant from one another.

In embodiments, the latching mechanisms 150 may be pin-in-groove latching mechanisms with a pin 154 oriented radially with respect to the pivoting mechanism 130, cone-in-cup contact interfaces with the conical axis oriented circumferentially with respect to the pivoting mechanism 130, or any configuration constraining at least two degrees of freedom with respect to the pivoting mechanism 130.

Each latching mechanism 150 includes a latch 152 and a latching pin 154.

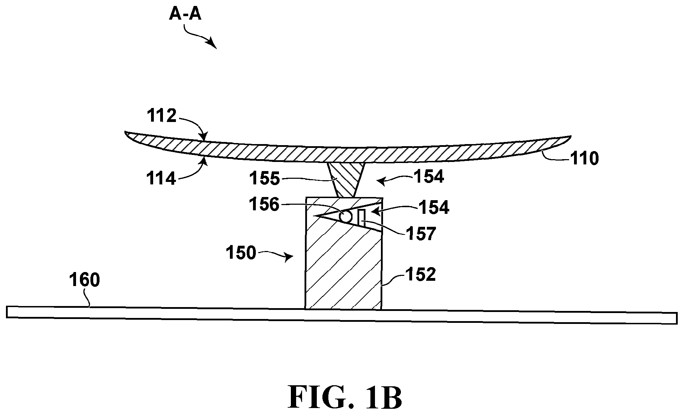

The latches 152 are attached to a spacecraft (see, for example, spacecraft panel 160 in Figure 1B) on which the reflector 110 (and the antenna system 100) is disposed. For example, the latches 150 may be mounted to a structure on the spacecraft, such as a spacecraft platform or bus panel.

The latching pins 154 are attached to the bottom side 114 of the reflector 110. When the latching pin 154 is held in the latch 152, the reflector 110 is attached to the spacecraft through the latching mechanism (because the latch 152 is attached to the spacecraft, the latching pin 154 is attached to the reflector 110, and the latching pin 154 is held in the latch 152).

Each latch 152 has a groove 153 into which the respective latching pin 154 can be received.

Each latch 152 includes a spring mechanism 157. The spring mechanism 157 holds the latching pin 154 within the groove 153.

The direction of entry/release of the latching pin 154 into/out of the groove 153 is tangential to a vector running from the latch 152 to the reflector 110 center of gravity.

The layout and number of latching mechanisms 150 constrains both out-of-plane and in-plane radial of movement of the reflector 110.

In operation, the pivoting mechanism 130 rotating section 134 and affixed reflector 110 are rotated around the rotation axis into a stowable position.

The rotation of the pivoting mechanism 130 moves each latching pin 154 into the respective groove 153 on the respective latch 152. When the latching pins 154 are within the grooves 153, the release mechanism interface 138 will also be in a position to interact with and be held in place by the release mechanism 140. The direction of rotation of the pivoting mechanism 130 to move the latching pins 154 into the latches 152 is a first direction which is opposite to a second direction of rotation of the pivoting mechanism 130 upon release of the release mechanism. That is, if the rotation of the pivoting mechanism 130 to move the latching pins 154 into the latches 152 is "clockwise" then the rotation of the pivoting mechanism 130 to move the latching pins 154 out of the latches 152 is "counterclockwise", and vice versa.

When the latching pins 154 and the release mechanism interface 138 are held in place, the reflector 110 is in a stowed configuration.

When the pivoting mechanism 130 is in the stowed configuration, the radial flexible blades 136 are distorted circumferentially and store potential energy such that the pivoting mechanism 130 has preload. That is, in the stowed configuration, the distortion of the radial flexible blades 136 creates a force which applies pressure to the release mechanism in the opposite direction of the rotation of the pivoting mechanism into the stowed configuration.

When the release mechanism 140 is released, the preload (or potential energy) of the radial flexible blades 136 is released and the resulting movement of the pivoting mechanism 130 (in the second direction) frees the latching pins 154 from the grooves 153 of the latches 152, which releases the reflector 110 from the stowed configuration.

The torque created by the release of the potential energy of the radial flexible blades 136 is strong enough to release the spring mechanism 157 holding the latching pins 154 within the grooves 153.

The flexibility of the radial flexible blades 136 provides potential energy when distorted but also ensures that any movement which does take place does not break the pivoting mechanism 130.

The release mechanism 140 may be any mechanism which is releasable without the use of a motor. For example, the release mechanism 140 may be a separation nut, a bolt breaking device (e.g., Frangibolt), shape memory alloy-based actuator (e.g., with explosively-splittable nut), a High Output Paraffin (HOP) mechanism, a cable cutter, or the like. The release mechanism 140 is generally a single component and may be a one-use component.

In an embodiment, the release mechanism 140 may be a bolt breaking device (e.g., frangibolt). The frangibolt may be configured to break when heated. A thermal line from the spacecraft to the frangibolt may be used to heat the frangibolt to a breaking point.

In an embodiment, the release mechanism 140 may be a separation nut. The separation nut constrains a threaded section of a bolt, the nut separation device provided by two or more nut sub-sections divided along the thread axial-radial plane. The nut sub-sections are compressed together by a coil wrapped helically over the nut assembly outer surface. The coil is loaded circumferentially as the bolt is preloaded. The coil is constrained by a fuse at the end of the coil. During release, this fuse is broken by an electrical input. The coil then unwraps from the nut assembly. The bolt is then released under its own preload sudden release.

After the reflector 110 is released, the reflector 110 is only connected to the spacecraft indirectly via the boom 120 (i.e., the boom 120 is connected to the spacecraft at one end and the reflector 110 at the other end).

Figure 1B is a schematic side view of the antenna system 100 taken along line A-A of Figure 1A, showing a single latching mechanism 150 and the reflector 110 in isolation.

The latching mechanism 150 includes latch 152 which is connected to, or otherwise interfaces with, a spacecraft panel 160 of a spacecraft (e.g., a platform of a satellite).

The latching mechanism 150 includes latching pin 154, which is connected to bottom side 114 of the reflector 110.

The latch 152 includes groove 153 into (and out of) which the latching pin 154 can be moved. In Figure 1B, the latching pin 154 is in the groove 153.

The latching pin 154 includes a body 155 and a head 156. The width of the body 155 allows the latching pin 154 to move into (and out of) the groove 153 (horizontal direction in Figure 1B), and the width of the head 156 prevents the latching pin 154 from moving up out of the groove 153 if the reflector 110 moves up and away from the latch 152 (vertical direction in Figure 1B).

The latching pin 154 is held in place within the groove 153 when the pivoting mechanism 130 is in the stowed configuration both indirectly by the release mechanism 140 (not shown), which is holding the pivoting mechanism 130 (not shown), and directly by a spring mechanism 157.

While the spring mechanism 157 is not strong enough to hold the pin 154 in place without the release mechanism 140 holding the pivoting mechanism 130, spring mechanism 157 ensures that the latching pin 154 stays within the groove 153.

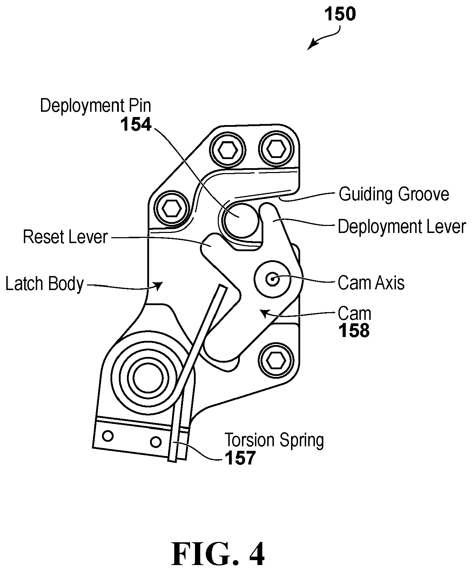

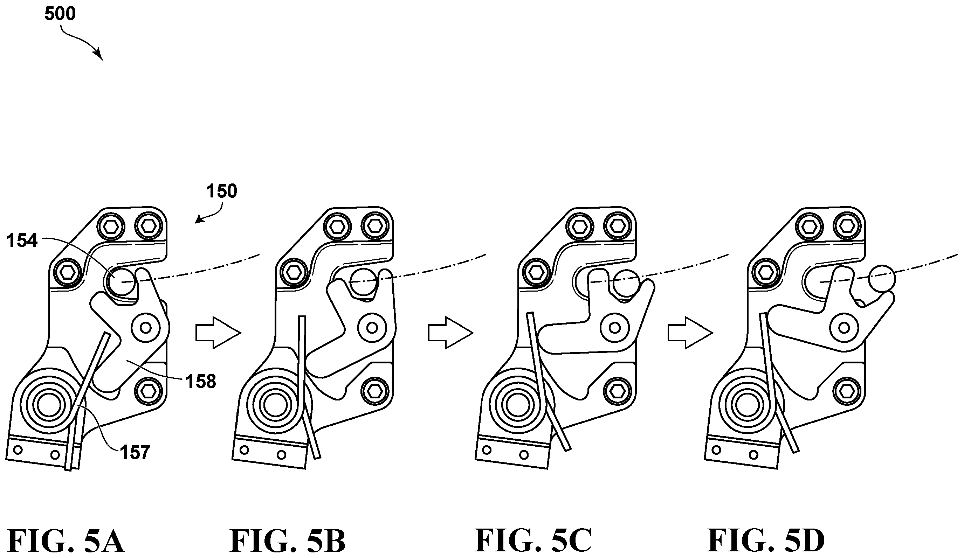

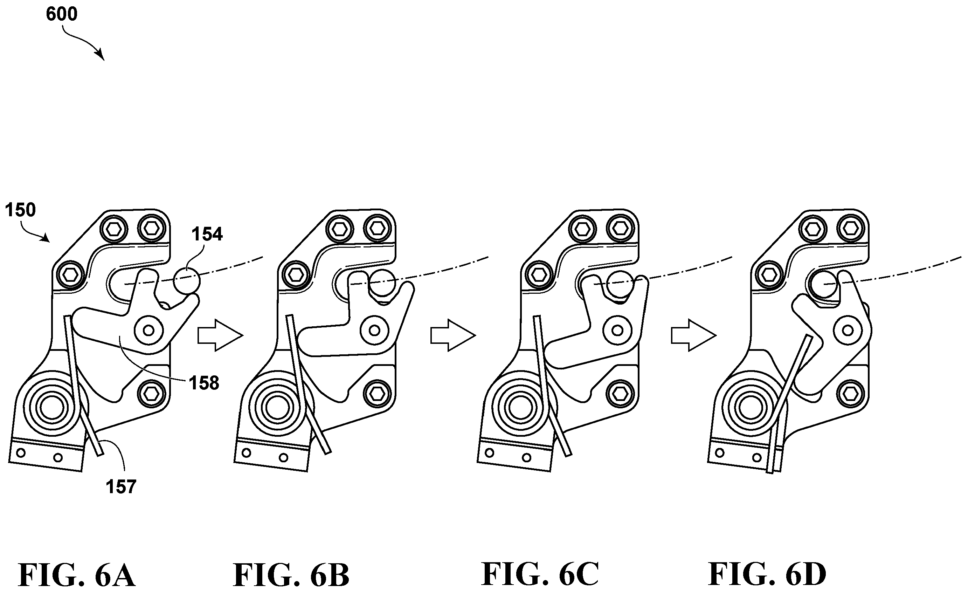

In an embodiment, the spring mechanism 157 is a torsion spring which releases the latching pin 154 when a great enough torque is applied due to the release of the release mechanism 140. A lever rotating around a shaft may be present between the torsion spring and the moving pin to add a mechanical advantage and allow stowing the reflector 110 back in place. An embodiment of the latching mechanism 150 including a torsion spring as the spring mechanism 157 and latching pin 154 is shown in Figure 4. Unlatching and latching operations 500, 600 of the example latching mechanism of Figure 4 are shown in Figures 5A-5D and 6A-6D, respectively.

Figure 4 shows an example of latching mechanism. The latching mechanism is not shown connected to a spacecraft or a reflector (or other deployable component). Only the elements of the latching mechanism described in the latching and unlatching operations are numbered. The latching mechanism includes a latch body, a cam 158 and cam axis for rotation of the cam 158, a guiding groove in the latch body, a deployment lever of the cam 158, a reset lever of the cam 158, a torsion spring 157, and a pin 154.

Figures 5A-5D show aspects of un-latching operation, for the embodiment of Figure 4. Components are only numbered in Figure 5A to reduce clutter. In Figure 5A the pin is at the latching pin 154 is at the bottom (or back) of the latch and the spring mechanism 157 holds a cam 158 in place, in Figure 5B the cam 158 resists movement of the latching pin 154 out of the latch, in Figure 5C the cam 158 is at an inflection point wherein under external pressure (e.g., from the release of stored potential energy) the latching pin 157 is still held in the latch but the cam 158 pushing against the spring mechanism 157, and in Figure 5D the cam 158 has pushed against the spring mechanism 157 sufficiently to free the latching pin 154 from the latch.

Figures 6A-6D show aspects of a latching operation, for the embodiment of Figure 4. Components are only number in Figure 5A to reduce clutter. In Figure 6A the latching pin 154 is free from the latch and the cam 158 is in a stable open position, in Figure 6B the latching pin 154 moves into the latch and touches a reset lever, in Figure 6C the cam 158 unlock from the open position and closes on the latching pin 154, wherein the spring mechanism 157 keeps the cam 158 in the closed position, and in Figure 6Dthe latching pin 154 is in the fully latched position at the bottom or back of the latch.

In other embodiments, the latching mechanism may employ functionalities other than a spring mechanism to hold the reflector in the stowed configuration.

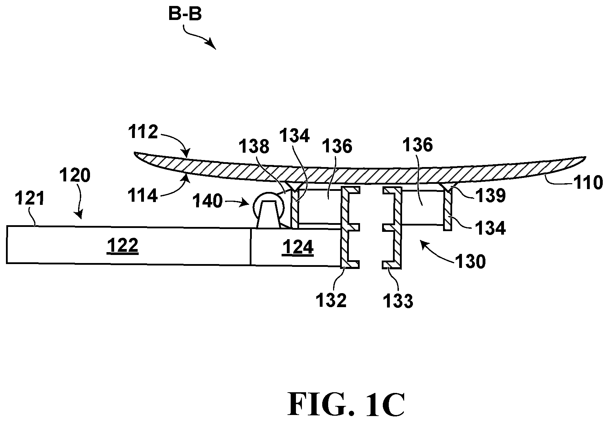

Referring now to Figure 1C, shown therein is a schematic side view of the antenna system 100 taken along line B-B of Figure 1A (without the latches 150).

View B-B of Figure 1C shows reflector 110, boom 120, pivoting mechanism 130, and release mechanism 140. The pivoting mechanism 130 includes a plurality of stiffening ribs 133 that are integral to the portion of the pivoting mechanism 130 fixed to the reflector 110.

Boom 120 includes boom segment 122 and boom bracket 124. Boom segment 122 connects to the spacecraft. Boom bracket 124 is connected to the reflector 110 and the pivoting mechanism 130. Boom segment 122 may be metallic or composite. Boom bracket 124 is disposed between the boom segment 122 and the pivoting mechanism 130. The boom bracket 124 may be composed of a metallic material. In an embodiment, boom segment 122 and boom bracket 124 are a single integral metallic part. The boom segment 122 may be deployed from a stowed position to its operational position once on-orbit. The boom bracket 124 provides a rigid load path of the preload acting between the pivoting mechanism 130 and the hold-and-release 140.

As in Figure 1A, the pivoting mechanism 130 includes two concentric circular components 132, 134 (inner circular component 132 and outer circular component 134). Inner circular component 132 is connected to outer circular component 134 by a plurality of radial flexible blades 136. In other embodiments, the circular components 132, 134 may be square, hexagonal, or any other suitable shape.

Circular component 132 is attached to the boom bracket 124.

The release mechanism 140 is connected to both the pivoting mechanism 130 (via interface component 138) and the boom 120 (via boom bracket 124). In some embodiments, shims may be added between the boom bracket 124 and the pivoting mechanism 130 (e.g., interface component 138) to adjust the preload applied on the reflector 110.

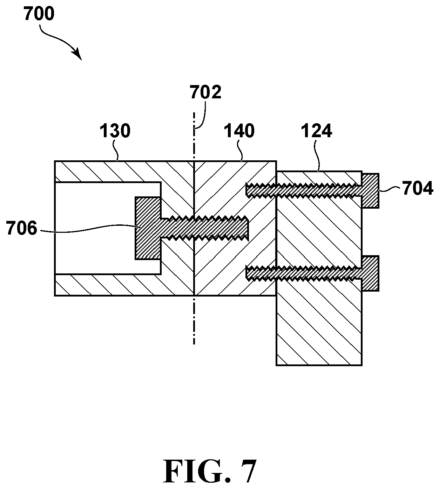

Figure 7 illustrates the connection (including separation plane 702) between the pivoting mechanism 130, the release mechanism 140, and the boom bracket 124. this is the cross-section of the frangibolt & separation plane that releases the stored energy
The pivoting mechanism 130 is attached to the reflector 110 by a connection 139. The connection 139 may be integral to the outer circular component 134 or may be a separate part connected through bolting or bonding. In some embodiments, boom bracket 124, pivoting mechanism 130, and reflector 110 may be integrally formed parts.

In the stowed configuration, the pivoting mechanism 130 is pivoted so that the release mechanism 140 holds the release mechanism interface component 138 of the pivoting mechanism 130. The pivoting of the pivoting mechanism 130 into the stowed configuration distorts the radial flexible blades 136 such that they store potential energy. Release of the stored potential energy creates torque.

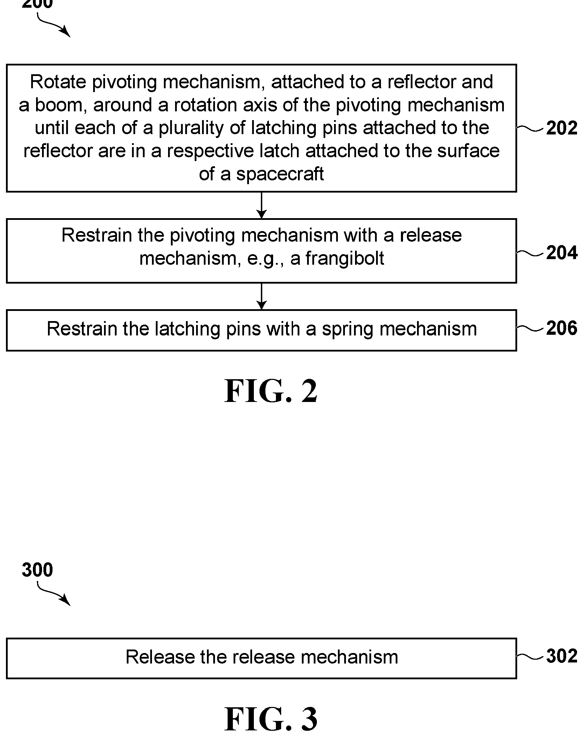

Referring now to Figure 2, shown therein is a method 200 of holding a reflector of an antenna system in a stowed configuration using a plurality of latching mechanisms, according to an embodiment. The antenna system may be similar or identical to antenna system 100 of Figures 1A-1C.

At 202, the method 200 includes rotating a pivoting mechanism, attached to a bottom side (closest to a spacecraft) of a reflector and a boom, around a rotation axis of the pivoting mechanism until each of a plurality of latching pins attached to the bottom side of the reflector are in a respective latch attached to a surface of a spacecraft (e.g., spacecraft panel).

That is, a pivoting mechanism comprising a bracket including two concentric circular components (outer and inner) connected by a plurality of radial flexible blades is rotated relative to the boom. The pivoting mechanism is attached to the bottom side of the reflector and, therefore, the reflector rotates with the pivoting mechanism. The latching pins are present on the bottom side of the reflector as well and move with the reflector to interact with the latches. The latches include grooves into which the latching pins move to hold the reflector down in a stowed configuration. The stowed configuration is closer to the spacecraft than a deployed configuration.

At 204, the method 200 further includes restraining the pivoting mechanism with a release mechanism on the boom. The release mechanism may be a frangibolt. The pivoting mechanism has a release mechanism interface attached to the outer circular component which interacts with the release mechanism. The release mechanism holds the pivoting mechanism in the stowed configuration.

The rotation of the pivoting mechanism distorts the radial flexible blades of the pivoting mechanism generating potential energy which is stored in the radial flexible blades while the pivoting mechanism is in the stowed configuration.

At 206, the method 200 preferably includes restraining the latching pins with a spring mechanism.

That is, a spring mechanism on each latch holds the latching pins within the groove of the latch. The spring mechanism may be a torsion spring mechanism or any mechanism that holds the latching pin in the groove and releases upon release of the release mechanism.

The distance the pivoting mechanism is rotated does not need to be large. For example, the distance may be as little as 0.5 inches or more than one inch, as long as the release mechanism and the latching pins hold the reflector in the stowed configuration and there is enough potential energy in the radial flexible blades to move the reflector to a deployed position.

Referring now to Figure 3, shown therein is a method 300 of releasing the latching mechanism of Figures 1A-1C, according to an embodiment.

At 302, the method 300 includes releasing the release mechanism. That is, whatever form the release mechanism takes, the release mechanism is released such that the reflector is freed from the stowed configuration.

In an embodiment where the release mechanism is a frangibolt, heat is applied to the frangibolt until the frangibolt breaks. Upon breaking (or other form of release for non-frangibolt release mechanisms), the pivoting mechanism is released from the release mechanism and the potential energy stored in the distorted radial flexible blades of the pivoting mechanism is released, creating torque as the pivoting mechanism rotates back in the opposite direction required for the stowed configuration.

The latching pins are released from the grooves of the latches as the pivoting mechanism rotates.

In an embodiment with a spring mechanism, the torque generated by the radial flexible blades overcomes the pressure of the spring mechanism which opens and releases the latching pins from the latches.

When the pivoting mechanism and the latching pins are released, the reflector is in a deployed position.

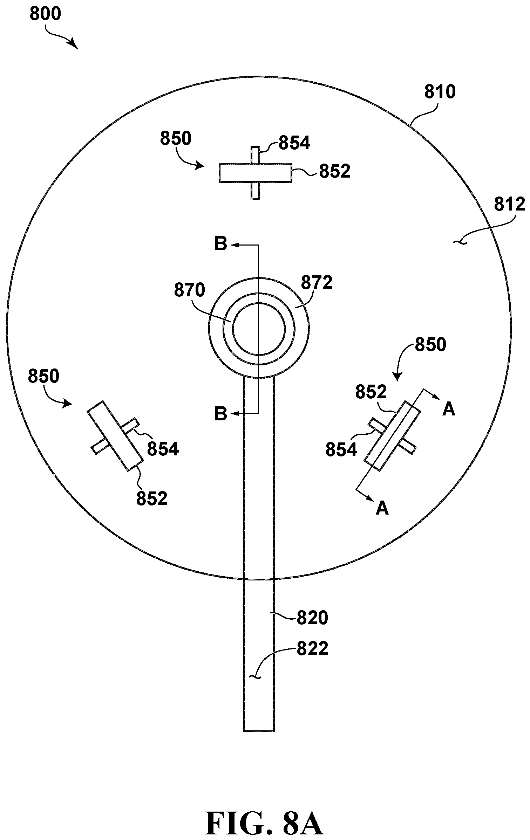

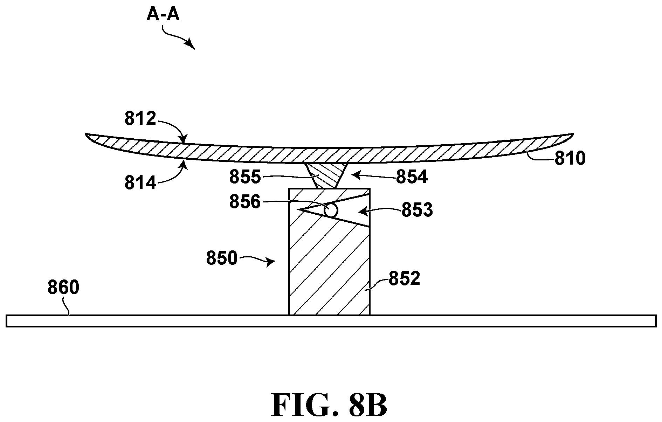

Figures 1A-C show and describe an antenna system with a latching system having a pivoting mechanism which uses stored energy to release the antenna from the stowed configuration. In another embodiment, the latching system may include a rotary actuator which is actuated to release the antenna from a stowed configuration, as shown in Figures 8A and 8B.

Figure 8A is a schematic top view of a portion of an antenna system 800 including a latching system for latching an antenna reflector 810, the latching system including a rotary actuator 870, and the antenna reflector depicted as transparent. The latches of Figure 8A may be similar or identical to the latches described above for Figure 1B, as well as other embodiments of latches described herein.

The antenna system 800 includes a reflector 810 for reflecting a radiofrequency ("RF") signal and a boom 820 for manipulating or moving the reflector 810 in one or more directions. The boom 820 is connected to the reflector 810 at one end and to a spacecraft on which the antenna system is disposed at the other end.

The reflector 810 includes a first surface 812 (or top surface 812) and an opposing second surface 814 (or bottom surface 814). The top surface 812 is a reflecting surface and is used to reflect RF signals. The bottom surface 814 is used for mounting various components to the reflector 810, including components of the latching system.

The top view in Figure 8A is of the top or reflecting surface 812 of the reflector 810. For illustrative purposes, the reflector 810 is represented as transparent in Figure 8A so that elements underneath the reflector 810 are visible. Note that the elements in Figure 8A depicted within the circle of reflector 810 are all below or behind the reflector 810.

In Figures 8A-8C the boom 820 is connected to the reflector 810 through a rotary actuator mechanism located at the approximate geometric center of the reflector 110 to enable movement of the reflector during the release operation. The rotary actuator mechanism includes a motorized rotary actuator 870 connected to a rotary actuator connector 872 mounted on the reflector 810.

The antenna system 800 includes a latching system for providing hold down and release functionalities to the reflector 810. Generally, the latching system holds the reflector 810 in a stowed configuration or position until the latching system is released. Once released, the reflector 810 is free to be deployed by the boom 820.

The latching system includes the rotary actuator mechanism comprising the rotary actuator 870 and the rotary actuator connector 872, and three latching mechanisms 850. In other embodiments, the number of latching mechanisms 850 may be greater than three.

As described above, the rotary actuator 870 is connected to the rotary actuator connector 872 and the boom 820. The rotary actuator 870 has a rotation axis at the center of the reflector 810 and causes the reflector to rotate along the normal plane of the reflector 810.

The rotary actuator 870 provides both a stowing mechanism to stow the reflector 810 in a stowed configuration and a release mechanism to release the reflector 810 from the stowed configuration.

Latching mechanisms 850 are positioned concentrically, with reference to the center of gravity of the reflector 810. The latching mechanisms 850 are positioned roughly equidistant from one another.

In embodiments, (and as shown in Figure 8B) the latching mechanisms 850 may be pin-in-groove latching mechanisms with a pin 854 oriented radially with respect to the rotary actuator mechanism, cone-in-cup contact interfaces with the conical axis oriented circumferentially with respect to the rotary actuator mechanism, or any configuration constraining at least two degrees of freedom with respect to the rotary actuator mechanism.

Each latching mechanism 850 includes a latch 852 and a latching pin 854 (shown in Figure 8B).

The latches 852 are attached to a spacecraft (see, for example, spacecraft panel 860 in Figure 8B) on which the reflector 810 (and the antenna system 800) is disposed. For example, the latches 850 may be mounted to a structure on the spacecraft, such as a spacecraft platform or bus panel.

The latching pins 854 are attached to the bottom side 814 of the reflector 810. When the latching pin 854 is held in the latch 852, the reflector 810 is attached to the spacecraft through the latching mechanism (because the latch 852 is attached to the spacecraft, the latching pin 854 is attached to the reflector 810, and the latching pin 854 is held in the latch 852).

Each latch 852 has a groove 853 into which the respective latching pin 854 can be received.

Unlike the embodiment of Figures 1A-C, the latches 150 do not include spring mechanisms. The movement of the pins 854 into and out of the latches is under the power of the rotary actuator 870. However, in other embodiments, the latches 850 may include spring mechanisms wherein the movement of the rotary actuator 870 releases the spring mechanisms.

The direction of entry/release of the latching pin 854 into/out of the groove 853 is tangential to a vector running from the latch 852 to the reflector 810 center of gravity.

The layout and number of latching mechanisms 850 constrains both out-of-plane and in-plane radial of movement of the reflector 810.

In operation, the rotary actuator 870 and affixed reflector 810 are rotated around the rotation axis into a stowable position.

The rotation of the rotary actuator 870 moves each latching pin 854 into the respective groove 853 on the respective latch 852. The direction of rotation of the rotary actuator 870 to move the latching pins 854 into the latches 852 is a first direction which is opposite to a second direction of rotation of the rotary actuator 870 to release the reflector 810 from the latches 852. That is, if the rotation of the rotary actuator 870 to move the latching pins 854 into the latches 852 is "clockwise" then the rotation of the rotary actuator 870 to move the latching pins 854 out of the latches 852 is "counterclockwise", and vice versa.

After the reflector 810 is released, the reflector 810 is only connected to the spacecraft indirectly via the boom 820 (i.e., the boom 820 is connected to the spacecraft at one end, and the rotary actuator 870 and reflector 810 at the other end).

Figure 8B is a schematic side view of the antenna system 800 taken along line A-A of Figure 8A, showing a single latching mechanism 850 and the reflector 810 in isolation.

The latching mechanism 850 includes latch 852 which is connected to, or otherwise interfaces with, a spacecraft panel 860 of a spacecraft (e.g., a platform of a satellite).

The latching mechanism 850 includes latching pin 854, which is connected to bottom side 814 of the reflector 810.

The latch 852 includes groove 853 into (and out of) which the latching pin 854 can be moved. In Figure 8B, the latching pin 854 is in the groove 853.

The latching pin 854 includes a body 855 and a head 856. The width of the body 855 allows the latching pin 854 to move into (and out of) the groove 853 (horizontal direction in Figure 8B), and the width of the head 856 prevents the latching pin 854 from moving up out of the groove 853 if the reflector 810 moves up and away from the latch 852 (vertical direction in Figure 8B).

The latching pin 854 is held in place within the groove 853 when rotary actuator 870 is in the stowed configuration.

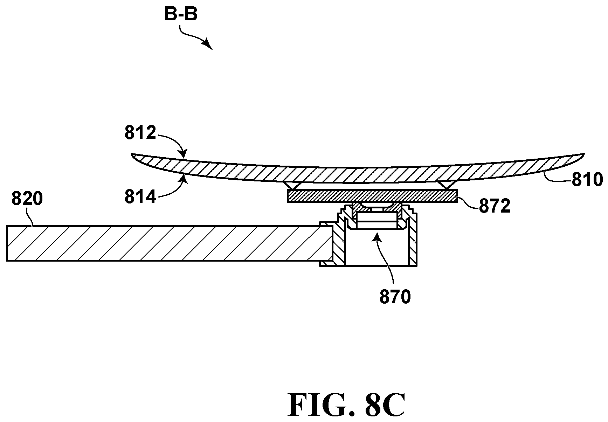

Referring now to Figure 8C, shown therein is a schematic side view of the antenna system 100 taken along line B-B of Figure 8A (without the latches 850).

View B-B of Figure 8C shows reflector 810, boom 820, rotary actuator 870, and rotary actuator connector 872.

Boom 820 may be metallic or composite. The boom 820 may be deployed from a stowed position to an operational position once on-orbit.

As in Figure 8A, the rotary actuator mechanism includes rotary actuator 870 and rotary actuator connector 872. The rotary actuator 870 is bidirectional to move the reflector into and out of a stowed configuration.

The rotary actuator connector 872 be integral to the reflector 810 or may be a separate part connected through bolting or bonding. In some embodiments, boom 820, the rotary actuator mechanism, and reflector 810 may be integrally formed parts.

While the above description provides examples of one or more apparatus, methods, or systems, it will be appreciated that other apparatus, methods, or systems may be within the scope of the claims as interpreted by one of skill in the art as limited by the appended claims.

## Claims

1. A latching mechanism system for holding and releasing a deployable component, the latching mechanism system comprising:
a plurality of latching mechanisms (150, 850) configured to be disposed on a spacecraft (160), each including a first component (154, 854) configured to be attached to the deployable component (110, 810) and a second component (152, 852) configured to be attached to a spacecraft (160), wherein in a stowed configuration each of the first components (154, 854) is held by a respective second component (152, 852); and
a rotating mechanism (130, 870) configured to be disposed on the bottom surface (114, 814) of the deployable component (110, 810) and having an axis of rotation at a center of the deployable component (110, 810), the rotating mechanism (130, 870) configured to rotate in a first direction around the axis of rotation to move the first components (154, 854) into the stowed configuration, and to rotate in a second direction opposite to the first direction to release the first components (154, 854) from the stowed configuration.

2. The system of claim 1, wherein the rotating mechanism (130, 870) is a pivoting mechanism (130) and where the system further comprises:
a release mechanism (140) for holding the pivoting mechanism (130) in the stowed configuration, wherein in the stowed configuration the pivoting mechanism (130) has stored potential energy, and wherein releasing the release mechanism (140) releases the stored potential energy causing the pivoting mechanism (130) to rotate in the second direction, and releases the first components (154, 854) from the stowed configuration.

3. The system of claim 1, wherein the rotating mechanism (130, 870) is a rotary actuator (870).

4. The system of claim 1, wherein the first component is a pin (154, 854), and the second component is a latch (152, 852).

5. The system of claim 1, further comprising a boom (120, 820), wherein the rotating mechanism (130, 870) is connected to the boom (120, 820) and wherein the deployable component (110, 810) is connected to the boom (120, 820) by a rotary joint at an approximate geometric center of the deployable component (110, 810).

6. The system of claim 2, wherein the pivoting mechanism (130) includes a plurality of radial flexible blades (136), wherein the radial flexible blades (136) are distorted when the pivoting mechanism (130) is rotated in the first direction and held by the release mechanism (140), and wherein upon release of the release mechanism (140), stored potential energy in the distorted flexible radial blades (136) rotates the pivoting mechanism (130) in the second direction to rotate the deployable component (110, 810) and release the first components (154, 854) from the second components (152, 852), thereby releasing the deployable component (110, 810).

7. The system of claim 2, wherein each latching mechanism (150, 850) of the plurality of latching mechanisms (150, 850) includes a spring mechanism (157) which holds the first component (154, 854) and the second component (152, 852) in the hold position.

8. The system of claim 7, wherein each spring mechanism (157) is a torsion spring (157) which releases the first component (154, 854) when enough torque is applied due to the release of the release mechanism (140) and rotation of the pivoting mechanism (130) in the second direction.

9. The system of claim 1, wherein the plurality of latching mechanisms (150, 850) constrain the deployable component (110, 810) along axial and radial directions with respect to a pivoting axis.

10. The system of claim 1, wherein the deployable component (110, 810) is an antenna reflector (110, 810).

11. A method of using a deployable component hold and release latching mechanism system, the method comprising:
rotating a rotating mechanism (130, 870) in a first direction around a rotation axis of the rotating mechanism (130, 870) until each of a plurality of first components (154, 854) of a latching mechanism system are held by a respective second component (152, 852) of a plurality of second components (152, 852) of the latching mechanism system, wherein the plurality of first components (154, 854) are attached to a first surface (114, 814) of the deployable component (110, 810), wherein the plurality of second components (152, 852) are attached to a spacecraft (160), and wherein the rotation axis of the rotating mechanism 130, 870) is at a center of the deployable component (110, 810).

12. The method of claim 11, wherein the rotating mechanism (130, 870) is a pivoting mechanism (130) attached to the first surface (114, 814) of the deployable component (110, 810) and to a boom (120, 820) and includes a plurality of radial flexible blades (136) which are distorted upon rotation in the first direction, and wherein the method further comprises:
restraining the pivoting mechanism (130) in a stowed configuration by a release mechanism (140), wherein in the stowed configuration each of the plurality of first components (154, 854) is held by a respective second component (152, 852), and wherein in the stowed configuration the plurality of radial flexible blades (136) stored torsional energy in a second direction opposite the first direction.

13. The method of claim 11, further comprising restraining each of the plurality of first components (154, 854) within the respective second component (152, 852) by a spring mechanism (157).

14. The method of claim 11, wherein the rotating mechanism (130, 870) is a rotary actuator (870) connected to the deployable component (110, 810).

15. The method of claim 11, further comprising:
activating a release mechanism (140) to release stored torsional energy from the plurality of radial flexible blades (136) of the pivoting mechanism (130) held in the stowed configuration; and
wherein release of the stored torsional energy rotates the pivoting mechanism (130) in a second direction opposite the first direction causing release of the plurality of first components (154, 854) from the plurality of respective second components (152, 852), thereby moving the deployable component (110, 810) into a deployed configuration.

## Patentansprüche

1. Verriegelungsmechanismussystem zum Halten und Freigeben einer entfaltbaren Komponente, wobei das Verriegelungsmechanismussystem Folgendes umfasst:
eine Vielzahl von Verriegelungsmechanismen (150, 850), die dazu ausgebildet sind, an einem Raumfahrzeug (160) angeordnet zu werden, wobei jeder Verriegelungsmechanismus eine erste Komponente (154, 854) umfasst, die dazu ausgebildet ist, an der entfaltbaren Komponente (110, 810) befestigt zu werden, sowie eine zweite Komponente (152, 852), die dazu ausgebildet ist, an dem Raumfahrzeug (160) befestigt zu werden, wobei in einer verstauten Konfiguration jede der ersten Komponenten (154, 854) von einer jeweiligen zweiten Komponente (152, 852) gehalten wird; und
einen Drehmechanismus (130, 870), der dazu ausgebildet ist, an der Unterseite (114, 814) der entfaltbaren Komponente (110, 810) angeordnet zu werden und eine Drehachse im Zentrum der entfaltbaren Komponente (110, 810) aufweist, wobei der Drehmechanismus (130, 870) dazu ausgebildet ist, sich in einer ersten Richtung um die Drehachse zu drehen, um die ersten Komponenten (154, 854) in die verstaute Konfiguration zu bewegen, und sich in einer der ersten Richtung entgegengesetzten zweiten Richtung zu drehen, um die ersten Komponenten (154, 854) aus der verstauten Konfiguration freizugeben.

2. System nach Anspruch 1, wobei der Drehmechanismus (130, 870) ein Schwenkmechanismus (130) ist und das System ferner Folgendes umfasst:
einen Freigabemechanismus (140) zum Halten des Schwenkmechanismus (130) in der verstauten Konfiguration, wobei der Schwenkmechanismus (130) in der verstauten Konfiguration potenzielle Energie gespeichert hat und wobei durch Freigeben des Freigabemechanismus (140) die gespeicherte potenzielle Energie freigesetzt wird, wodurch sich der Schwenkmechanismus (130) in der zweiten Richtung dreht und die ersten Komponenten (154, 854) aus der verstauten Konfiguration freigegeben werden.

3. System nach Anspruch 1, wobei der Drehmechanismus (130, 870) ein Drehantrieb (870) ist.

4. System nach Anspruch 1, wobei die erste Komponente ein Stift (154, 854) und die zweite Komponente eine Verriegelung (152, 852) ist.

5. System nach Anspruch 1, ferner umfassend einen Ausleger (120, 820), wobei der Drehmechanismus (130, 870) mit dem Ausleger (120, 820) verbunden ist und wobei die entfaltbare Komponente (110, 810) über ein Drehgelenk an einem annähernden geometrischen Zentrum der entfaltbaren Komponente (110, 810) mit dem Ausleger (120, 820) verbunden ist.

6. System nach Anspruch 2, wobei der Schwenkmechanismus (130) eine Vielzahl radialer flexibler Lamellen (136) umfasst, wobei die radialen flexiblen Lamellen (136) verformt werden, wenn der Schwenkmechanismus (130) in der ersten Richtung gedreht und durch den Freigabemechanismus (140) gehalten wird, und wobei nach Freigabe des Freigabemechanismus (140) die in den verformten radialen flexiblen Lamellen (136) gespeicherte potenzielle Energie den Schwenkmechanismus (130) in der zweiten Richtung dreht, um die entfaltbare Komponente (110, 810) zu drehen und die ersten Komponenten (154, 854) von den zweiten Komponenten (152, 852) zu lösen, wodurch die entfaltbare Komponente (110, 810) freigegeben wird.

7. System nach Anspruch 2, wobei jeder Verriegelungsmechanismus (150, 850) der Vielzahl von Verriegelungsmechanismen (150, 850) einen Federmechanismus (157) umfasst, der die erste Komponente (154, 854) und die zweite Komponente (152, 852) in einer Halteposition hält.

8. System nach Anspruch 7, wobei jeder Federmechanismus (157) eine Torsionsfeder (157) ist, welche die erste Komponente (154, 854) freigibt, wenn infolge der Freigabe des Freigabemechanismus (140) und der Drehung des Schwenkmechanismus (130) in der zweiten Richtung ein ausreichendes Drehmoment aufgebracht wird.

9. System nach Anspruch 1, wobei die Vielzahl von Verriegelungsmechanismen (150, 850) die entfaltbare Komponente (110, 810) bezüglich einer Schwenkachse in axialer und radialer Richtung begrenzt.

10. System nach Anspruch 1, wobei die entfaltbare Komponente (110, 810) ein Antennenreflektor (110, 810) ist.

11. Verfahren zum Verwenden eines Verriegelungsmechanismussystems zum Halten und Freigeben einer entfaltbaren Komponente, wobei das Verfahren Folgendes umfasst:
Drehen eines Drehmechanismus (130, 870) in einer ersten Richtung um eine Drehachse des Drehmechanismus (130, 870), bis jede einer Vielzahl erster Komponenten (154, 854) eines Verriegelungsmechanismussystems von einer jeweiligen zweiten Komponente (152, 852) einer Vielzahl zweiter Komponenten (152, 852) des Verriegelungsmechanismussystems gehalten wird,
wobei die Vielzahl erster Komponenten (154, 854) an einer ersten Oberfläche (114, 814) der entfaltbaren Komponente (110, 810) befestigt sind,
wobei die Vielzahl zweiter Komponenten (152, 852) an einem Raumfahrzeug (160) befestigt sind, und
wobei sich die Drehachse des Drehmechanismus (130, 870) im Zentrum der entfaltbaren Komponente (110, 810) befindet.

12. Verfahren nach Anspruch 11, wobei der Drehmechanismus (130, 870) ein Schwenkmechanismus (130) ist, der an der ersten Oberfläche (114, 814) der entfaltbaren Komponente (110, 810) sowie an einem Ausleger (120, 820) befestigt ist und eine Vielzahl radialer flexibler Lamellen (136) umfasst, die bei einer Drehung in der ersten Richtung verformt werden, wobei das Verfahren ferner Folgendes umfasst:
Festhalten des Schwenkmechanismus (130) in einer verstauten Konfiguration mittels eines Freigabemechanismus (140),
wobei in der verstauten Konfiguration jede der Vielzahl erster Komponenten (154, 854) von einer jeweiligen zweiten Komponente (152, 852) gehalten wird, und
wobei in der verstauten Konfiguration die Vielzahl radialer flexibler Lamellen (136) Torsionsenergie in einer der ersten Richtung entgegengesetzten zweiten Richtung speichert.

13. Verfahren nach Anspruch 11, ferner umfassend:
Halten jeder der Vielzahl erster Komponenten (154, 854) innerhalb der jeweiligen zweiten Komponente (152, 852) mittels eines Federmechanismus (157).

14. Verfahren nach Anspruch 11, wobei der Drehmechanismus (130, 870) ein mit der entfaltbaren Komponente (110, 810) verbundener Drehantrieb (870) ist.

15. Verfahren nach Anspruch 11, ferner umfassend:
Aktivieren eines Freigabemechanismus (140), um in den radialen flexiblen Lamellen (136) des in der verstauten Konfiguration gehaltenen Schwenkmechanismus (130) gespeicherte Torsionsenergie freizusetzen,
wobei die Freisetzung der gespeicherten Torsionsenergie den Schwenkmechanismus (130) in einer der ersten Richtung entgegengesetzten zweiten Richtung dreht, wodurch die Vielzahl erster Komponenten (154, 854) aus den jeweiligen zweiten Komponenten (152, 852) freigegeben wird und die entfaltbare Komponente (110, 810) dadurch in eine entfaltete Konfiguration überführt wird.

## Revendications

1. Système de mécanisme de verrouillage destiné à maintenir et à libérer un composant déployable, ledit système de mécanisme de verrouillage comprenant :
une pluralité de mécanismes de verrouillage (150, 850) configurés pour être disposés sur un engin spatial (160), chacun incluant
un premier composant (154, 854) configuré pour être fixé au composant déployable (110, 810) et
un deuxième composant (152, 852) conçu pour être fixé à un engin spatial (160),
dans lequel, dans une configuration repliée, chacun des premiers composants (154, 854) est maintenu par un deuxième composant (152, 852) respectif ; et
un mécanisme de rotation (130, 870) configuré pour être disposé sur la surface inférieure (114, 814) du composant déployable (110, 810) et ayant un axe de rotation au centre du composant déployable (110, 810), le mécanisme de rotation (130, 870) étant configuré pour tourner dans une première direction autour de l'axe de rotation pour déplacer les premiers composants (154, 854) vers la configuration repliée, et pour tourner dans une deuxième direction, opposée à la première direction, pour libérer les premiers composants (154, 854) de la configuration repliée.

2. Système selon la revendication 1, dans lequel le mécanisme de rotation (130, 870) est un mécanisme de pivotement (130) et dans lequel le système comprend en outre :
un mécanisme de déverrouillage (140) destiné à maintenir le mécanisme de pivotement (130) dans la configuration repliée, dans lequel, dans la configuration repliée, le mécanisme de pivotement (130) emmagasine de l'énergie potentielle, et dans lequel le déverrouillage du mécanisme de déverrouillage (140) libère l'énergie potentielle emmagasinée, ce qui provoque la rotation du mécanisme de pivotement (130) de tourner dans la deuxième direction et libère les premiers composants (154, 854) de la configuration repliée.

3. Système selon la revendication 1, dans lequel le mécanisme de rotation (130, 870) est un actionneur rotatif (870).

4. Système selon la revendication 1, dans lequel le premier composant est une goupille (154, 854), et le deuxième composant est un loquet (152, 852).

5. Système selon la revendication 1, comprenant en outre une flèche (120, 820), dans lequel le mécanisme de rotation (130, 870) est connecté à la flèche (120, 820) et dans lequel le composant déployable (110, 810) est connecté à la flèche (120, 820) par un joint rotatif situé approximativement au centre géométrique du composant déployable (110, 810).

6. Système selon la revendication 2, dans lequel le mécanisme de pivotement (130) inclut une pluralité de pales radiales flexibles (136), dans lequel les pales radiales flexibles (136) sont déformées lorsque le mécanisme de pivotement (130) est mis en rotation dans la première direction et maintenues par le mécanisme de déverrouillage (140), et dans lequel, lors du relâchement du mécanisme de déverrouillage (140), l'énergie potentielle emmagasinée dans les pales radiales flexibles (136) déformées fait tourner le mécanisme de pivotement (130) dans la deuxième direction pour faire tourner le composant déployable (110, 810) et de libérer les premiers composants (154, 854) des deuxièmes composants (152, 852), libérant ainsi le composant déployable (110, 810).

7. Système selon la revendication 2, dans lequel chaque mécanisme de verrouillage (150, 850) de la pluralité de mécanismes de verrouillage (150, 850) inclut un mécanisme à ressort (157) qui maintient le premier composant (154, 854) et le deuxième composant (152, 852) en position de retenue.

8. Système selon la revendication 7, dans lequel chaque mécanisme à ressort (157) est un ressort de torsion (157) qui libère le premier composant (154, 854) lorsqu'un couple suffisant est appliqué en raison du déclenchement du mécanisme de déverrouillage (140) et de la rotation du mécanisme de pivotement (130) dans la deuxième direction.

9. Système selon la revendication 1, dans lequel la pluralité de mécanismes de verrouillage (150, 850) contraint le composant déployable (110, 810) selon les directions axiale et radiale par rapport à un axe de pivotement.

10. Système selon la revendication 1, dans lequel le composant déployable (110, 810) est un réflecteur d'antenne (110, 810).

11. Procédé d'utilisation d'un système de mécanismes de verrouillage pour le maintien et la libération d'un composant déployable, le procédé comprenant :
la rotation d'un mécanisme de rotation (130, 870) dans une première direction autour d'un axe de rotation dudit mécanisme de rotation (130, 870) jusqu'à ce que chacun d'une pluralité de premiers composants (154, 854) d'un système de mécanisme de verrouillage soit maintenu par un deuxième composant (152, 852) respectif parmi une pluralité de deuxièmes composants (152, 852) du système de mécanisme de verrouillage, dans lequel la pluralité de premiers composants (154, 854) est fixée à une première surface (114, 814) du composant déployable (110, 810), dans lequel la pluralité de deuxièmes composants (152, 852) est fixée à un engin spatial (160), et dans lequel l'axe de rotation du mécanisme de rotation (130, 870) se trouve au centre du composant déployable (110, 810).

12. Procédé selon la revendication 11, dans lequel le mécanisme de rotation (130, 870) est un mécanisme de pivotement (130) fixé à la première surface (114, 814) du composant déployable (110, 810) et à une flèche (120, 820) et inclut une pluralité de pales radiales flexibles (136) qui se déforment lors d'une rotation dans la première direction, et dans lequel le procédé comprend en outre :
le maintien du mécanisme de pivotement (130) dans une configuration repliée par un mécanisme de déverrouillage (140), dans lequel, dans la configuration repliée, chacun des éléments de la pluralité de premiers composants (154, 854) est maintenu par un deuxième composant (152, 852) respectif, et dans lequel, dans la configuration repliée, la pluralité de pales radiales flexibles (136) emmagasine de l'énergie de torsion dans une deuxième direction opposée à la première direction.

13. Procédé selon la revendication 11, comprenant en outre le maintien de chacun des premiers composants (154, 854) à l'intérieur du deuxième composant (152, 852) respectif par un mécanisme à ressort (157).

14. Procédé selon la revendication 11, dans lequel le mécanisme de rotation (130, 870) est un actionneur rotatif (870) connecté au composant déployable (110, 810).

15. Procédé selon la revendication 11, comprenant en outre :
l'activation d'un mécanisme de déverrouillage (140) pour libérer l'énergie de torsion emmagasinée par la pluralité de pales radiales flexibles (136) du mécanisme de pivotement (130) maintenues dans la configuration repliée ; et
dans lequel la libération de l'énergie de torsion emmagasinée fait tourner le mécanisme de pivotement (130) dans une deuxième direction opposée à la première direction, provoquant la libération de la pluralité de premiers composants (154, 854) de la pluralité de deuxièmes composants (152, 852) respectifs, amenant ainsi le composant déployable (110, 810) dans une configuration déployée.
